# EUROPÄISCHE PATENTSCHRIFT

(11) **EP 0 395 633 B1**
(45) Veröffentlichungstag und Bekanntmachung des Hinweises auf die Patenterteilung: **15.09.1993**
(21) Anmeldenummer: 88902105.1
(22) Anmeldetag: 11.03.1988
(51) Int. Cl.: C05F 9/02, B01D 53/00, B09B 1/00

(54) **ROTTEPLATTEN-SYSTEM**
COMPOSTING PLATE SYSTEM
SYSTEME DE PLATEAUX DE COMPOSTAGE

(30) Priorität: 08.04.1987 DE 3711816; 18.12.1987 DE 3743027
(43) Veröffentlichungstag der Anmeldung: 07.11.1990
(73) Patentinhaber: SCHUMACHER, Liane, D-42799 Leichlingen (DE)
(72) Erfinder: SCHUMACHER, Liane, D-42799 Leichlingen (DE)
(74) Vertreter: Patentanwälte Lippert, Stachow, Schmidt & Partner
(86) Internationale Anmeldenummer: DE8800138
(87) Internationale Veröffentlichungsnummer: WO8807984

(56) Entgegenhaltungen:
- EP-A- 0 133 556
- WO-A-84/02901
- DE-A- 1 954 823
- DE-A- 2 442 331
- DE-A- 2 503 262
- DE-A- 2 521 374
- DE-A- 2 551 599
- FR-A- 785 575
- FR-A- 2 221 465
- FR-A- 2 390 684
- GB-A- 1 533 046

## Beschreibung

Die Erfindung betrifft ein befahrbares Rotteplatten-System aus Betonelementen zur Behandlung von schüttfähigen Gütern, insbesondere zur Kompostierung, Entwässerung und/oder Durchgasung und dergl. sowie zur Behandlung von Gasen mittels eines auf dem Rotteplatten-System befindlichen Bettes aus Filtermaterial, bestehend aus rechteckig oder quadratisch ausgebildeten Platten mit an der Oberseite vorgesehenen Durchlaßöffnungen, mit einem mit diesem verbundenen inneren Hohlraum zur Schaffung eines Flüssigkeitssaufnahmeraumes und/oder eines Gaszufüh - rungssystemes sowie mindestens einem Flüssigkeitsauslaß aus dem Hohlraum und/oder Gaseinlaß.

Bei der Herstellung von sogenannten Grünkomposten aus beispielsweise geschnittenem Gras, geschreddertem Baummaterial oder dergl. entstehen größere Mengen an Huminsäuren und anderen Schadstoffen. Bisher werden die Grünkomposte auf dem Erdreich gelagert. Die bei dem Verrottungsvorgang entstehenden Schadstoffe, die flüssig oder beispielsweise in Regenwasser löslich sind, gelangen unmittelbar in das Grundwasser und belasten den Wasserhaushalt in erheblichem Maße.

Ferner gibt es Bio-Filtrationsverfahren, bei denen beispielsweise ein zu reinigendes Abgas durch ein Verteilungssystem durch ein Bett aus Filtermaterial geleitet wird. Als Filtermaterlal wird eine Biomasse verwendet, z.B. aus Müllkompost, Fasertorf oder dergl., wobei das zu reinigende Gas beim Durchströmen des Bettes über den Feuchtigkeitsfilm des Trägermaterials in intensiven Kontakt mit der Biomasse kommt. Die aus dem Gas zu entfernenden Stoffe werden mikrobiell umgewandelt bzw. abgebaut oder auch einfach absorbiert. Das Verfahren arbeitet bei hohen Feuchtigkeitsgehalten des Filtermaterials, so daß große Mengen an mit Schadstoffen belasteter Flüssigkeit entstehen. Das Verfahren wird in aufwendigen flüssigkeitsdichten Behältern durchgeführt.

Bei einem bekannten Rotteplatten-System der genannten Art (DE-A-25 51 599) sind einstückige Betonformplatten vorgesehen, die eine relativ große Dicke aufweisen. Der innere Hohlraum in jeder Formplatte wird durch einen die Platten in Längsrichtung durchlaufenden Kanal gebildet. Die Durchlaßöffnungen werden dadurch geschaffen, daß auf einer Seite der Formplatte eine oder mehrere kanalförmige Ausnehmungen in den Bereich der oberen Seitenkanten führen.

Aus der DE-A-25 03 262 ist ein Trageelement für Fußbodenplatten bekannt. Dieses besteht aus einem konischen Kunststoffbecher, in den kunststoffvergüteter Beton eingefüllt ist. Die gefüllten Kunststoffbecher werden nach einem vorgegebenen Raster auf einem Betonboden aufgestellt. Darüber werden viereckige Fußbodenplatten gelegt, die mit länglichen Durchlaßöffnungen versehen sind.

Nach der GB-A-1 533 046 ist ein Fußbodensystem bekannt, in welchem Kunststoff-Heizungsschläuche für eine Niedertemperatur-Fußbodenheizung verlegt werden können.

Aus der FR-A-785 575 ist eine Fermentationskammer bekannt, die einen perforierten Doppelboden aufweist.

Aus der DE-A-25 21 374 ist ein Bauelement für die Drainage, Bewässerung, Belüftung und Beheizung von Flächen im Erd-, Grund-, Wasser- und Heizungsbau bekannt. Dieses Bauelement besteht im wesentlichen aus zwei parallel zueinanderverlaufenden Kunststoffplatten oder -folien, die durch einen Abstand zueinander einen Hohlraum zur Wasserführung bilden.

Der Erfindung liegt die Aufgabe zugrunde, das befahrbare Rotteplatten-System der eingangs genannten Art derart weiterzubilden, daß es einfach im Aufbau ist, leicht verlegt und gereinigt werden kann, eine gute Entwässerung und/oder Durchgasung des Behandlungsmaterials erlaubt und auch der Belastung beim Befahren durch Fahrzeuge und Geräte sicher standhält.

Erfindungsgemäß wird diese Aufgabe dadurch gelöst, daß mindestens eine massive flüssigkeitsundurchlässige Unterplatte aus Beton mit einer ebenen Unterseite zur Auflage auf dem verfestigten Erdreich vorgesehen ist, daß auf dieser eine obere massive Tragplatte aus Beton mit ebener Oberseite aufliegt, in der die Durchlaßöffnungen ausgebildet sind, daß zumindest an eine der beiden Platten massive Abstandshalter angeformt sind, die in sich senkrecht kreuzenden Reihen in gleichen Abständen zueinander angeordnet sind, daß die Seitenflächen der Abstandshalter von den Auflageflächen aus gewölbeähnlich bogenförmig in die jeweilige Plattenebene und aus dieser gewölbeähnlich bogenförmig in die Seitenflächen der benachbarten Abstandshalter übergehen, so daß freie Durchgänge großen Querschnitts entstehen, und daß wenigstens im Randbereich der Platten eine Einrichtung zum Arretieren der Tragplatte relativ zu der Unterplatte vorgesehen ist.

Durch das erfindungsgemäße System, welches großflächig angelegt werden kann, wird mit sehr einfachen Mitteln eine Einrichtung geschaffen, die die beispielsweise aus der Kompostmasse oder dem Bio-Filtermaterial austretenden Flüssigkeiten auffängt und ein Eindringen der Schadstoffe in den Boden verhindert. Gleichzeitig wird durch das System eine gute Belüftung des Kompostes bzw. eine gute Durchgasung der Filtermasse von unten her geschaffen, so daß das Kompostierungs- bzw. Filterverfahren dadurch vorteilhaft beeinflußt und beschleunigt wird. Durch die stabile Ausbildung der Platten, insbesondere durch die gewölbeähnliche Ausbildung der Abstützungen, kann das System problemlos durch Fahrzeuge und Geräte befahren werden. Die Platten sind relativ leicht ausgebildet, so daß sie von Hand verlegt werden können.

Eine besonders zweckmäßige Ausgestaltung der Abstandshalter besteht darin, daß diese in gleicher Form und Anordnung sowohl an der Oberseite der Unterplatte als auch an der Unterseite der Tragplatte angeordnet sind und bei aufeinandergelegten Platten genau aufeinanderliegen.

Zwischen den jeweiligen parallelen Seitenkanten der jeweiligen benachbarten Auflageflächen können halbzylindrische Vertiefungen ausgebildet sein, so daß bei aufeinanderliegenden Platten sich senkrecht kreuzende freie Durchgänge mit kreisförmigem Querschnitt entstehen. Diese Querschnitte sollten einen freien Durchmesser von ca. 8 bis 15 cm, vorzugsweise von 12 cm, aufweisen. Bei diesen Abmessungen der Durchgangsquerschnitte ist eine einwandfreie Luftzirkulation, die beispielsweise die Kompostierung beschleunigt, gewährleistet. Auch sind dadurch die Voraussetzungen für eine einfache und gründliche Reinigung der Platten gegeben.

Die gegeneinander anliegenden Anlageflächen der Abstandshalter sind zweckmäßig rund oder quadratisch ausgebildet.

Vorzugsweise sind sowohl die Unterplatten als auch die Tragplatten aus glasfaserverstärktem Beton gefertigt, so daß man mit relativ dünnen und leichten Platten auskommt, die ohne größeren Aufwand transportiert und verlegt werden können. Selbst dünne Platten aus glasfaserverstärktem Beton lassen eine hohe Punktbelastung zu.

Die Platten sind zweckäßig rechteckig oder quadratisch auusgebildet und in Richtung einer Seitenkante mit leichtem Gefälle zu einer Ablaufrinne hin verlegt. In der Ablaufrinne wird die aus den Zwischenräumen mehrerer Platteneinheiten auslaufende Flüssigkeit aufgefangen und einem Sammelbehälter zugeführt, von dem aus eine Entsorgung stattfinden kann.

Vorzugsweise sind die Platten zumindest an den Langseiten mit einem durchgehenden Rand in Höhe der Abstandshalter versehen. Durch diese Maßnahme wird auf sehr einfache Weise verhindert, daß die in dem Zwischenraum gesammelte Flüssigkeit seitlich von der Unterplatte herunterlaufen und in das Erdreich eindringen kann. Dadurch ist auch eine Nebeneinanderverlegung der Platten ohne weiteres möglich.

Alternativ können die Ränder der Platten auch offen und im Randbereich des Systems durch Begrenzungssteine, Betonschwellen oder dergl. verschlossen sein.

Wenn angestrebt wird, das Belüftungssystem durch das gesamte, aus mehreren Einzelelementen zusammengesetzte System zu führen, können die aneinander angrenzenden Ränder der Unterplatten je einen stufenförmigen Absatz aufweisen, wobei sich die beiden Absätze bei der Verlegung der Platten überlappen und in den Überlappungsbereich eine Dichtung einlegbar ist. Dadurch kann auf einen Seitenrand verzichtet werden, da eine ausreichende Dichtung zwischen den Unterplatten gegeben ist. Die Dichtung kann aber auch bei Unterplatten mit Seitenrand als zusätzliche Maßnahme eingesetzt werden.

Alternativ können die aneinander angrenzenden Ränder der Unterplatten Nuten mit eingelegten Dichtungsbändern aufweisen, wodurch beim seitlichen Aneinanderlegen der Einzelplatten eine ausreichende Dichtung geschaffen werden kann.

Zur Zentrierung der Platten relativ zueinander sind vorzugsweise Kupplungsringe vorgesehen, die die aufeinander aufliegenden Bereiche der Abstandshalter formschlüssig umgreifen. Durch diese Maßnahme werden die Oberplatten relativ zu den Unterplatten zuverlässig fixiert.

Die Trennlinie zwischen den einzelnen Platten verläuft vorzugsweise durch die Mittelpunkte der Abstandshalter, wobei jeweils in den Ecken der Platten Viertelteile der Abstandshalter entstehen, die gemeinsam mit den Viertelteilen der drei angrenzenden Plattenecken einen vollen Abstandshalter bilden. Auf die vier aneinandergrenzenden Viertelteile kann dann ein Kupplungsring aufgesteckt werden, so daß mit Hilfe der Kupplungsringe auch die nebeneinanderliegenden Unter- und Oberplatten zuverlässig fixiert werden können.

Zumindest die Unterplatten können an ihrer mit den Abstandshaltern versehenen Oberseite mit einer Kunststoffbeschichtung versehen sein, die den Beton beispielsweise gegen die bei der Kompostierung entstehenden aggressiven Flüssigkeiten abschirmt und zusätzlich als Flüssigkeitsdichtung wirkt. Bei der Herstellung kann eine Kunststoffolie als Hohlform für das Betonteil verwendet werden, die dann als verlorene Schalung an dem Betonteil verbleibt.

Die in den Tragplatten vorgesehenen Durchlaßöffnungen sind zweckmäßig als zwischen den Abstandshaltern angeordnete Schlitze ausgebildet. Diese sind vorzugsweise nach unten trichterförmig aufgeweitet, so daß eine Verstopfung durch eingedrückte Kompostmasse verhindert werden kann.

Die Schlitze sind zweckmäßig schräg zu der Richtung der Durchgänge angeordnet, und zwar vorzugsweise mit abwechselnd gegenläufigen Schrägungswinkeln, wodurch die Durchgasung noch verbessert werden kann.

Die Größe der Platten des Systems ist beliebig. Vorzugsweise ist die Plattengröße jedoch so gewählt, daß die einzelnen Platten leicht gehandhabt werden können. Es ist auch durchaus möglich, die Platten nur in Fliesengröße herzustellen und daraus das System zusammenzusetzen, wobei als Abstandshalter jeweils nur in den vier Ecken Viertelteile ausgebildet sind.

Die Erfindung ist in der Zeichnung beispielsweise veranschaulicht und nachstehend im einzelnen anhand der Zeichnung beschrieben. Es zeigen:
- Fig. 1: in perspektivischer Darstellung einen Ausschnitt aus einer Unterplatte mit aufgelegter und teilweise abgeschnittener Tragplatte,
- Fig. 2: eine Darstellung mehrerer zu einem System verlegter Platten in Kombination mit einer Ablaufrinne,
- Fig. 3: den abgedichteten Randbereich zweier Unterplatten einer anderen Ausführungsform,
- Fig. 4: in perspektivischer Darstellung einen Ausschnitt aus einem anderen Ausführungsbeispiel einer Unterplatte mit aufgelegter und teilweiser abgeschnittener Tragplatte,
- Fig. 5: eine Darstellung mehrerer zu einem System verlegter Platten gemäß Fig. 4 in Kombination mit einer seitlichen Ablaufrinne,
- Fig. 6: in vergrößerter Darstellung den Bereich von vier aneinander angrenzenden Unterplatten gemäß Fig. 4 und
- Fig. 7: in ebenfalls vergrößerter Darstellung den Randbereich einer Unterplatte mit aufgelegter Tragplatte.

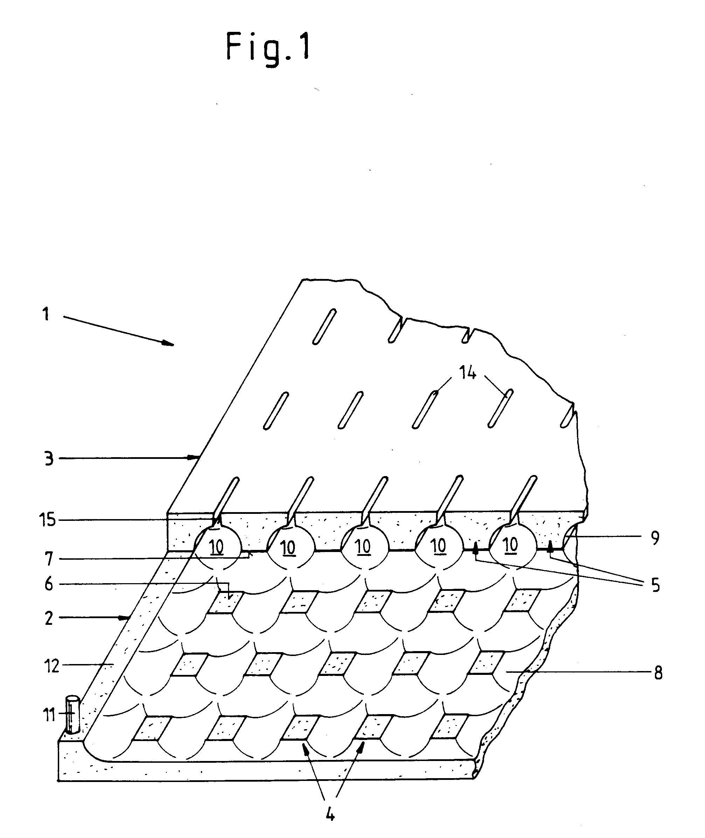

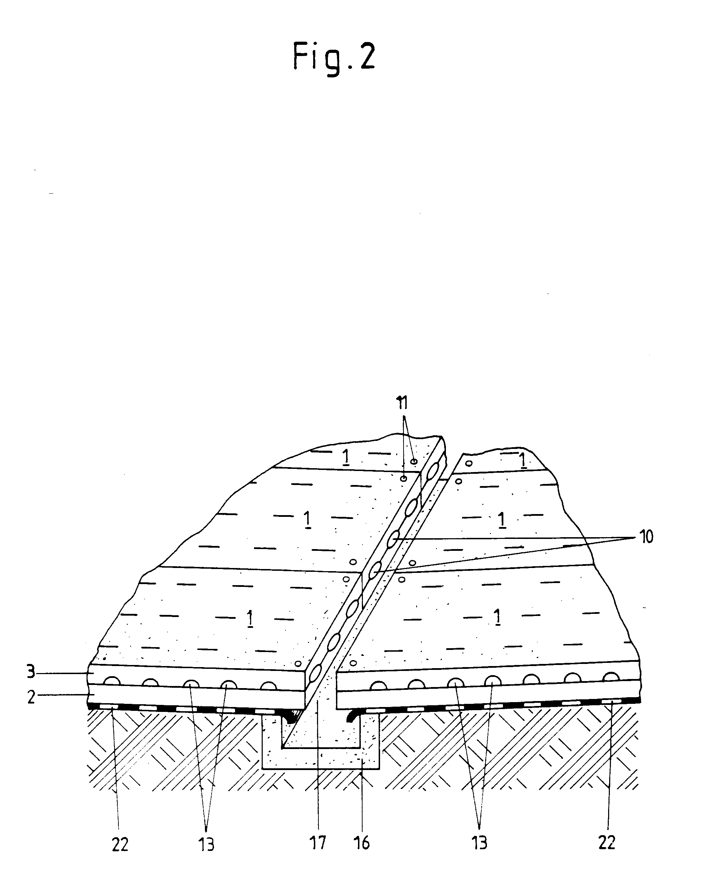

Nach Fig. 1 und 2 der Zeichnung besteht das Rotteplatten-System aus mehreren nebeneinander verlegten Einzelelementen 1, die jeweils aus einer Unterplatte 2 sowie einer auf dieser liegenden Tragplatte 3 zusammengesetzt sind.

Beide Platten 2 und 3 sind aus glasfaserverstärktem Beton hergestellt.

An der Oberseite der Unterplatte 2 sowie an der Unterseite der Tragplatte 3 sind nach einem vorgegebenen Raster Abstandshalter 4 und 5 angeordnet, die bei aufeinandergelegten Platten 2 und 3 genau aneinander anliegen.

Die gegeneinander anliegenden Auflageflächen 6 und 7 der Abstandshalter 4 und 5 sind quadratisch ausgebildet und die Seitenflächen 8 und 9 der Abstandshalter gehen von den quadratischen Auflageflächen 6 bzw. 7 aus bogenförmig in die jeweilige Plattenebene über. Dadurch entsteht zwischen den gegenüberliegenden parallelen Seitenkanten der jeweiligen benachbarten Auflageflächen 6 bzw. 7 der jeweiligen Platte 2 bzw. 3 eine halbzylindrische Vertiefung. Wenn die Platten 2 und 3 in ihrer vorgegebenen Position aufeinanderliegen, bilden die halbzylindrischen Vertiefungen sich senkrecht kreuzende Durchgänge 10 mit kreisförmigem Querschnitt.

Die Querschnitte der Durchgänge müssen ausreichend groß sein, damit nicht nur die aus dem Kompost austretende Flüssigkeit ohne Störung abgeführt werden kann, sondern auch eine ausreichende und gezielte Belüftung über die gesamte Fläche der Platten sichergestellt ist.

Die Unterplatte 2 und die Tragplatte 3 sind jeweils rechteckig ausgebildet und weisen die gleichen Abmessungen auf. Um zu gewährleisten, daß die Abstandshalter 4 und 5 mit ihren Auflageflächen 6 und 7 genau aufeinanderliegen, können in den Eckpunkten der Platten 2 und 3 Zentrierstifte 11 in entsprechende Zentrierbohrungen eingesteckt werden.

Nach Fig. 1 und 2 der Zeichnung sind an den Langseiten der Unterplatten durchgehende Ränder 12 angeordnet, die die gleiche Höhe wie die Abstandshalter 4 aufweisen.

Die Ränder 12 schaffen für die Unterplatte 2 einen seitlichen Abschluß, so daß jeweils zwischen den beiden äußeren Rändern 12 eine Wanne gebildet wird, die ein seitliches Herunterlaufen der Flüssigkeit von den Unterplatten ausschließt. Trotzdem ist aber eine Belüftung auch in Querrichtung möglich, denn zwischen den seitlichen Abstandshaltern der Tragplatte 3 bleiben halbkreisförmige Durchgänge 13 auf angehobenem Niveau frei, wie beispielsweise in Fig. 2 zu erkennen ist.

Die Tragplatte 3 ist an ihrer Oberseite mit zwischen den Abstandshaltern 5 ausgebildeten schlitzförmigen Durchlaßöffnungen 14 versehen, durch die die bei der Kompostierung entstehende Flüssigkeit auf die Unterplatte 2 hindurchlaufen kann. Die Schlitze weisen nach unten eine trichterförmige Aufweitung 15 auf, um Verstopfungen vorzubeugen.

Die rechteckigen Platten 2 und 3, die aus glasfaserverstärktem Beton hergestellt sind, können relativ dünn ausgebildet sein. Von ihrer Außenfläche bis zur Ebene der Abstandshalter 4 bzw. 5 können sie eine Höhe von etwa 9 cm haben. Im Grunde der Durchgänge 10, die bei aufeinandergelegten Platten etwa einen Durchmesser von 12 cm aufweisen, bleibt dann immer noch eine Mindestwandstärke von ca. 3 cm.

Die relativ großen Durchgänge 10 bieten nicht nur einen einwandfreien Abtransport der durchtretenden Flüssigkeit und eine gute Belüftung des Kompostes von unten, sondern können auch beispielsweise mit Hilfe eines Wasserstrahls oder eines Hochdruckreinigers schnell und problemlos gereinigt werden. Auch eignen sie sich für Zwangsbelüftungen.

Wie in Fig. 2 dargestellt, können die Einzelelemente 1, die jeweils aus einer Unterplatte 2 und einer Tragplatte 3 bestehen, nach einem bestimmten Verlegeschema angeordnet werden. In der Mitte eines Rotteplatzes ist beispielsweise eine U-förmige Drainagerinne 16 verlegt, die mit einem in der Zeichnung nicht dargestellten Sammelbehälter verbunden ist. Die Einzelelemente 1 sind in paralleler Anordnung dicht nebeneinander verlegt, wobei die Langseiten der Einzelelemente 1 senkrecht zu der Drainagerinne 16 liegen. Zur Rinne hin sind die Einzelelemente mit leichtem Gefälle von etwa 1,5 % verlegt. Die Enden der Einzelelemente 1 liegen auf den Rändern der Drainagerinne 16 auf, wobei die Einzelelemente 1, die auf gegenüberliegenden Seiten der Drainagerinne 16 verlegt sind, zwischen ihren Enden einen Durchgangsspalt 17 freilassen, durch den die aus den inneren Durchgängen 10 austretende Flüssigkeit in die Rinne hineinlaufen kann.

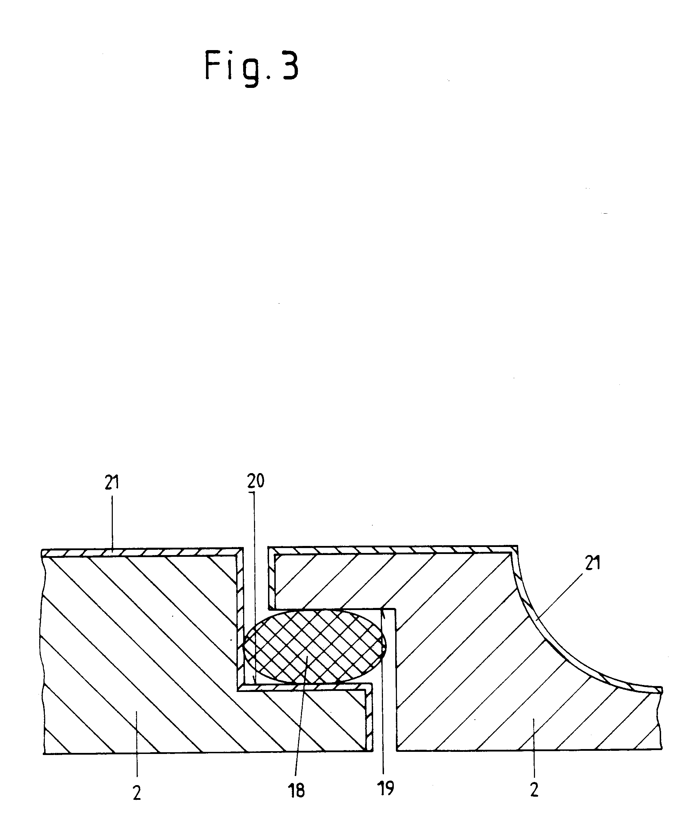

In Fig. 3 sind die Längsränder zweier benachbarter Unterplatten dargestellt, die gegeneinander abgedichtet sind. Als Dichtung dient ein O-Ring 18 aus beispielsweise Gummi, der zwischen zwei sich überlappende stufenförmige Absätze 19 und 20 eingelegt ist. Dadurch kann der Spalt zwischen zwei nebeneinander verlegten Unterplatten 2 zuverlässig abgedichtet werden.

Die Oberseite der in Fig. 3 dargestellten Unterplatten 2 ist mit einer Kunststoffolie 21 überzogen. Diese bietet nicht nur einen zuverlässigen flüssigkeitsdichten Schutz für die Unterplatten, sondern erleichtert auch die Herstellung, indem die vorgeformte Folie 21 nach Art einer verlorenen Schalung als Gießform für die Platten verwendet werden kann.

Selbstverständlich können auch die Tragplatten 3 nach dieser Technik hergestellt sein.

Wenn die Auflagefläche, auf der die Platten verlegt werden sollen, nicht ausreichend verfestigt werden kann und eine Verschiebung der Platten relativ zueinander befürchtet werden muß, kann als zusätzliche Sicherheitsabdichtung eine Kunststoffbahn 22 oder eine sonstige Abdichtung unter die Einzelelemente gelegt werden. Auf der Seite der Drainagerinne 16 wird die Dichtungsbahn über den Rinnenrand verlegt, so daß auch die eventuell zwischen den Unterplatten 2 hindurchgelaufene Flüssigkeit in die Drainagerinne 16 gelangen kann.

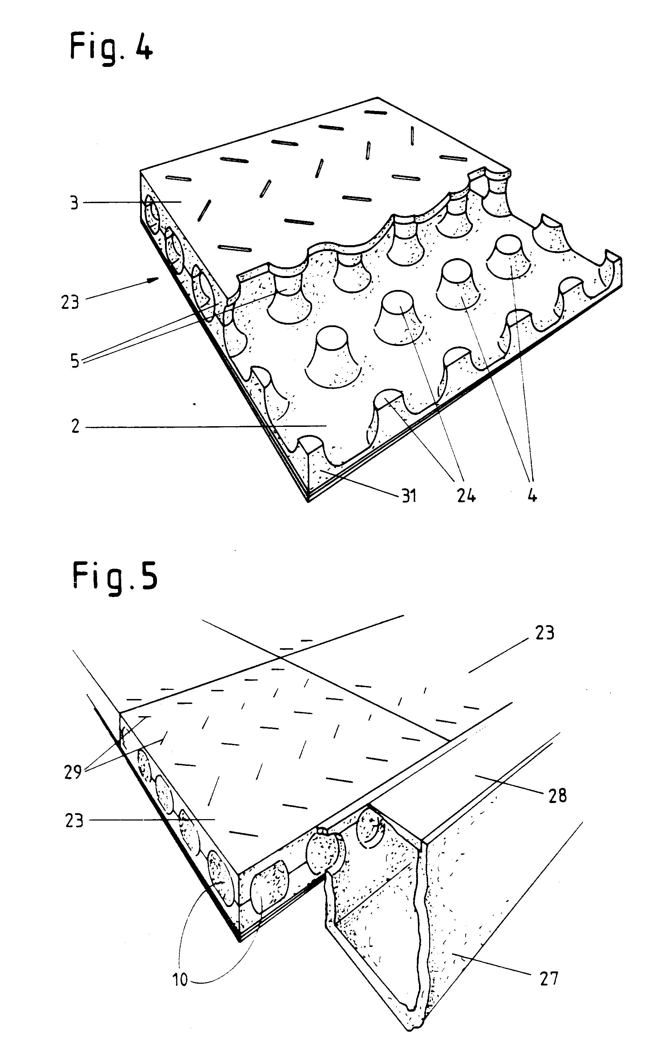

Bei dem in Fig. 4 bis 7 dargestellten Ausführungsbeispiel sind die Einzelelemente 23 quadratisch ausgebildet und bestehen ebenso wie bei dem in Fig. 1 bis 3 dargestellten Ausführungsbeispiel je aus einer Unterplatte 2 sowie einer Tragplatte 3. Die Abstandshalter 4 bzw. 5 sind mit jeweils runden Auflageflächen 24 versehen.

Wenn die Tragplatten 3 auf die Unterplatten 2 aufgelegt sind, entstehen ebenso wie bei dem oben beschriebenen Ausführungsbeispiel sich senkrecht kreuzende Durchgänge 10. In dem vorliegenden Ausführungsbeispiel sind allerdings die Ränder der Platten offen, so daß ein allseitig addierbares System entsteht, welches zu einer beliebig großen Fläche zusammengelegt werden kann. Selbstverständlich ist es auch hier möglich, die Einheiten in kleinere Segmente mit separater Belüftung zu unterteilen, indem die seitlichen Ränder in bestimmten Bereichen verschlossen werden.

Die umlaufenden Ränder der Unterplatten 2 sind bei diesem Ausführungsbeispiel mit Nuten 25 versehen, in die Dichtungsbänder eingelegt werden, so daß beim Aneinanderlegen die Unterplatten eine nach unten hin dichte Rundfläche bilden. Die Entwässerung erfolgt mit Hilfe von Drainagerinnen 27, die am Rande eines Systems oder auch zwischen einzelnen System-Segmenten verlegt sind und in die die Durchgänge 10 seitlich hineinmünden. Wie in Fig. 5 dargestellt, ist in dem vorliegenden Ausführungsbeispiel die Drainagerinne 27 mit Hilfe einer Deckplatte 28 abgedeckt, die in gleicher Höhe liegt wie die Oberfläche der jeweiligen Tragplatte 3.

In den Tragplatten 3 sind wiederum Durchlaßschlitze 29 angeordnet, die ähnlich ausgebildet sind wie die Durchlaßöffnungen 14 in dem in Fig. 1 dargestellten Ausführungsbeispiel. Die Schlitze 29 sind allerdings schräg zu den Durchgängen 10 angeordnet, und zwar unter einem Winkel von etwa 45°. Die Schrägungswinkel verlaufen abwechselnd in gegenläufigen Richtungen.

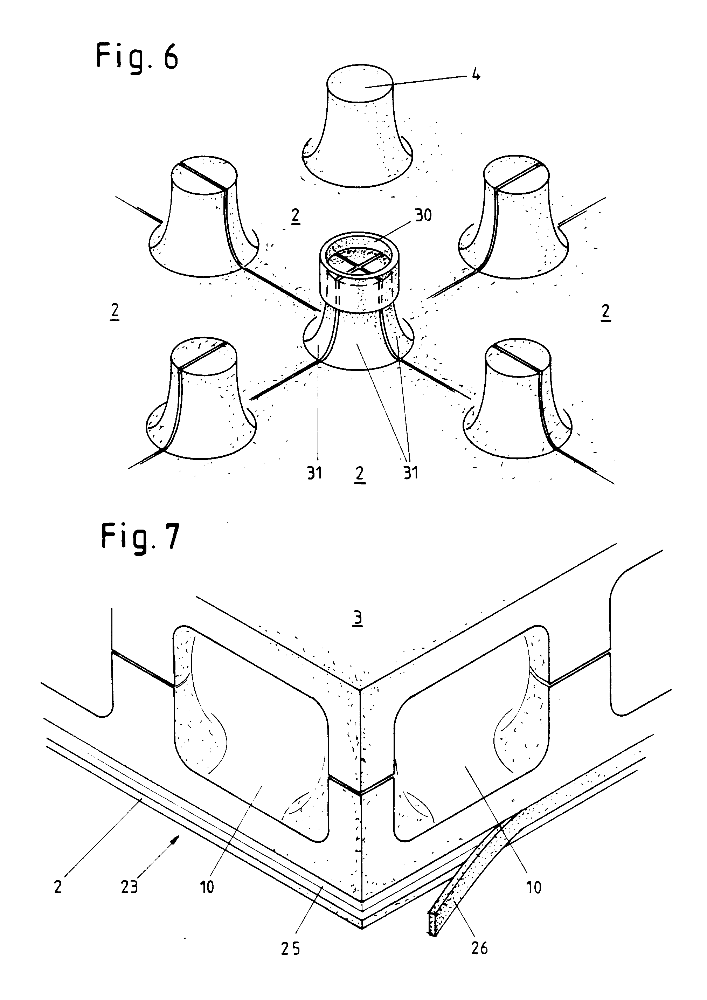

Wie aus den Figuren 4 bis 7 ersichtlich ist, verlaufen die Trennlinien zwischen den einzelnen Platten 2 bzw. 3 genau durch die Mittelpunkte der Abstandshalter 2 und 3, so daß die Auflageflächen 24 in den Randbereichen in Halbkreise und in den vier Ecken in Viertelkreise unterteilt werden. Wie insbesondere aus Fig. 6 zu ersehen ist, bilden dann die aneinanderliegenden Elemente wiederum vollständige runde Abstandshalter.

Zum Zusammenhalten der Platten dienen Kupplungsringe 30, die über vier aneinanderliegende Viertelteile 31 gesteckt sind. Der jeweilige Kupplungsring 30 umschließt die vier Viertelteile 31 fest und formschlüssig und steht nach oben über die Auflagefläche hinaus vor, so daß in diesen vorspringenden, offenen Bereich des Kupplungsrings 30 der zugeordnete Abstandshalter der Tragplatte eingreifen kann, der ebenfalls formschlüssig und fest in den Kupplungsring 30 eingreift, so daß nicht nur ein Zusammenhalten der einzelnen Plattenteile, sondern auch eine Zentrierung der Tragplatten relativ zu den Unterplatten erfolgt.

| **Bezugszeichenliste** | | | |
|---|---|---|---|
| 1 | Einzelelement | 26 | Dichtungsband |
| 2 | Unterplatte | 27 | Drainagerinne |
| 3 | Tragplatte | 28 | Deckplatte |
| 4 | Abstandshalter | 29 | Durchlaßschlitze |
| 5 | Abstandshalter | 30 | Kupplungsring |
| 6 | Auflagefläche | 31 | Viertelteil |
| 7 | Auflagefläche | | |
| 8 | Seitenfläche | | |
| 9 | Seitenfläche | | |
| 10 | Durchgänge | | |
| 11 | Zentrierstifte | | |
| 12 | Rand | | |
| 13 | Durchgänge | | |
| 14 | Durchlaßöffnungen | | |
| 15 | trichterförmige Aufweitungen | | |
| 16 | Drainagerinne | | |
| 17 | Durchgangsspalt | | |
| 18 | O-Ring | | |
| 19 | stufenförmiger Absatz | | |
| 20 | stufenförmiger Absatz | | |
| 21 | Kunststoffolie | | |
| 22 | Kunststoffbahn | | |
| 23 | Einzelelement | | |
| 24 | Auflagefläche | | |
| 25 | Nut | | |

## Patentansprüche

1. Befahrbares Rotteplatten-System aus Betonelementen zur Behandlung von schüttfähigen Gütern, insbesondere zur Kompostierung, Entwässerung und/oder Durchgasung und dergleichen sowie zur Behandlung von Gasen mittels eines auf dem Rotteplatten-System befindlichen Bettes aus Filtermaterial, bestehend aus rechteckig oder quadratisch ausgebildeten Platten mit an der Oberseite vorgesehenen Durchlaßöffnungen, mit einem mit diesem verbundenen inneren Hohlraum zur Schaffung eines Flüssigkeitsaufnahmeraumes und/oder eines Gaszuführungssystemes sowie mindestens einem Flüssigkeitsauslaß aus dem Hohlraum und/oder einem Gaseinlaß**, dadurch gekennzeichnet**, daß mindestens eine massive flüssigkeitsundurchlässige Unterplatte (2) aus Beton mit einer ebenen Unterseite zur Auflage auf dem verfestigten Erdreich vorgesehen ist, daß auf dieser eine obere massive Tragplatte (3) aus Beton mit ebener Oberseite aufliegt, in der die Durchlaßöffnungen (14; 29) ausgebildet sind, daß zumindest an eine der beiden Platten (2,3) massive Abstandshalter (4,5) angeformt sind, die in sich senkrecht kreuzenden Reihen in gleichen Abständen zueinander angeordnet sind, daß die Seitenflächen (8,9) der Abstandshalter (4,5) von den Auflageflächen (6,7) aus gewölbeähnlich bogenförmig in die jeweilige Plattenebene und aus dieser gewölbeähnlich bogenförmig in die Seitenflächen (8,9) der benachbarten Abstandshalter (4,5) übergehen, so daß freie Durchgänge (10) großen Querschnitts entstehen, und daß wenigstens im Randbereich der Platten (2,3) eine Einrichtung zum Arretieren der Tragplatte (3) relativ zu der Unterplatte (2) vorgesehen ist.

2. Befahrbares Rotteplatten-System nach Anspruch 1, **dadurch gekennzeichnet,** daß die Abstandshalter (4, 5) in gleicher Form und Anordnung sowohl an der Oberseite der Unterplatte (2) als auch an der Unterseite der Tragplatte (3) angeordnet sind und bei aufeinandergelegten Platten genau aufeinanderliegen

3. Befahrbares Rotteplatten-System nach Anspruch 2, **dadurch gekennzeichnet,** daß bei aufeinanderliegenden Platten (2, 3) sich senkrecht kreuzende freie Durchgänge (10) mit wesentlichen kreisförmigem Querschnitt entstehen.

4. Befahrbares Rotteplatten-System nach den Ansprüchen 1 bis 3, **dadurch gekennzeichnet,** daS die freien Durchgänge (10) einen Durchmesser von 8 bis 15 cm aufweisen.

5. Befahrbares Rotteplatten-System nach Anspruch 2 oder 3, **dadurch gekennzeichnet,** daß die gegeneinander gerichteten Auflageflächen (6, 7) der Abstandshalter (4, 5) rechteckig, vorzugsweise quadratisch, ausgebildet sind.

6. Befahrbares Rotteplatten-System nach Anspruch 2 oder 3 **dadurch gekennzeichnet,** daß die gegeneinander gerichteten Auflageflächen (24) rund ausgebildet sind.

7. Befahrbares Rotteplatten-System nach einem der Ansprüche 1 bis 6, **dadurch gekennzeichnet,** daS die Unterplatten (2) und die Tragplatten (3) aus glasfaserverstärktem Beton bestehen.

8. Befahrbares Rotteplatten-System nach einem der Ansprüche 1 bis 7, **dadurch gekennzeichnet,** daS die Platten (2, 3) rechteckig oder quadratisch ausgebildet sind und in Richtung einer Seitenkante mit leichtem Gefälle zu einer Ablaufrinne (16) hin verlegt sind.

9. Befahrbares Rotteplatten-System nach Anspruch 1 bis 8, **dadurch gekennzeichnet,** daß die Unterplatten (2) zumindest an einer Seite einen durchgehenden Rand (12) in Höhe der Abstandshalter (4) aufweisen.

10. Befahrbares Rotteplatten-System nach einem der Ansprüche 1 bis 8, **dadurch gekennzeichnet,** daS die Ränder der Platten offen und im Randbereich des Systems durch Begrenzungssteine oder dergl. verschlossen sind.

11. Befahrbares Rotteplatten-System nach einem der Ansprüche 1 bis 10, **dadurch gekennzeichnet,** daß die aneinander angrenzenden Ränder der Unterplatten (2) je einen stufenförmigen Absatz (19, 20) aufweisen, wobei sich die beiden Absätze bei der Verlegung der Platten (2, 3) überlappen und in den Überlappungsbereich eine Dichtung (18) einlegbar ist.

12. Befahrbares Rotteplatten-System nach einem der Ansprüche 2 bis 10, **dadurch gekennzeichnet,** daß die aneinander angrenzenden Ränder der Unterplatten (2) Nuten (25) mit eingelegten Dichtungsbändern (26) aufweisen.

13. Befahrbares Rotteplatten-System nach einem der Ansprüche 2 bis 12, **dadurch gekennzeichnet,** daß zur Zentrierung der Platten relativ zueinander Kupplungsringe (30) vorgesehen sind, die die aufeinander aufliegenden Bereiche der Abstandshalter formschlüssig umgreifen.

14. Befahrbares Rotteplatten-System nach Anspruch 13, **dadurch gekennzeichnet,** daß die Trennlinie zwischen den einzelnen Platten durch die Mittelpunkte der Abstandshalter verlaufen, wobei jeweils in den Ecken der Platten Viertelteile (31) der Abstandshalter entstehen, die gemeinsam mit den Viertelteilen der drei angrenzenden Plattenecken einen vollen Abstandshalber bilden, und daß auf die vier aneinander anliegenden Viertelteile (31) ein Kupplungsring (30) aufgesteckt ist.

15. Befahrbares Rotteplatten-System nach einem der Ansprüche 1 bis 14, **dadurch gekennzeichnet,** daS zumindest die Unterplatten (2) an ihrer mit den Abstandshaltern (4) versehenen Oberseite mit einer Kunststoffbeschichtung (21) versehen sind.

16. Befahrbares Rotteplatten-System nach einem der Ansprüche 1 bis 15, **dadurch gekennzeichnet,** daS die in den Tragplatten (3) vorgesehenen Durchlaßöffnungen (14) als zwischen den Abstandshaltern (5) angeordnete Schlitze ausgebildet sind.

17. Befahrbares Rotteplatten-System nach Anspruch 16, **dadurch gekennzeichnet,** daß die Schlitze nach unten trichterförmig (15) aufgeweitet sind.

18. Befahrbares Rotteplatten-System nach Anspruch 16 oder 17, **dadurch gekennzeichnet,** daß die Durchlaßschlitze (29) schräg zu der Richtung der Durchgänge (10) angeordnet sind.

## Claims

1. Trafficable rotting-slab system consisting of concrete elements for the treatment of loose material, in particular for composting, dewatering and/or gas feeding and the like and for the treatment of gases, by means of a bed of filter material situated on the rotting-slab system, consisting of rectangularly or quadratically formed slabs, having passage openings provided on the upper side, having an inner cavity, connected to the latter, to create a liquid-receiving space and/or a gas feed system and having at least one liquid outlet from the cavity and/or a gas inlet, characterized in that at least one massive liquid-impermeable lower slab (2) out of concrete with the plane lower side for resting on the consolidated ground is provided, in that an massive upper supporting slab (3) consisting of concrete with a plane upper side in which the passage openings (14, 29) are formed rests on said lower slab, in that massive spacers (4, 5) are formed integrally at least on one of the two slabs (2, 3), in that the spaces (4, 5) are arranged at equal distances from one another in perpendicularly intersecting rows, in that, starting from the bearing surfaces (6, 7), the side faces (8, 9) of the spacers (4, 5) merge in an arc shape into the respective slab plane and from this in an arc shape in the side faces (8, 9) of the bearing spaces (4, 5) resulting in free passages (10) having a large cross section, and in that an arrangement for locking the supporting slab (3) relative to the lower slab (2) is provided.

2. Trafficable rotting-slab system according to claim 1, characterized in that the spacers (4, 5) are provided in the same shape and arrangement both on the upper side of the lower slab (2) and on the underside of the supporting slab (3) and when the slabs are laid one on top of the other rest exactly against one another.

3. Trafficable rotting-slab system according to claim 2, characterized in that when the slabs (2, 3) are resting one on top of the other, perpendicularly intersecting free passages (10) having an essentially circular cross-section are formed.

4. Trafficable rotting-slab system according to claim 1 to 3, characterized in that the free passages (10) have a cross section of 8 till 15 cm.

5. Trafficable rotting-slab system according to claim 2 or 3, characterized in that the mutually facing bearing surfaces (6, 7) of the spaces (4, 5) are of rectangular design, preferably square.

6. Trafficable rotting-slab system according to claim 2 or 3, characterized in that the mutually facing bearing surfaces (24) are of round design.

7. Trafficable rotting-slab system according to one of the claims 1 to 6, characterized in that the lower slabs (2) and the supporting slabs (3) are made out of glass fiber-reinforced concrete.

8. Trafficable rotting-slab system according to one of the claims 1 to 7, characterized in that the slabs (2, 3) are of rectangular or square design and, in the direction of one lateral edge, are laid with a slight gradient towards a drainage channel (16).

9. Trafficable rotting-slab system according to claim 1 to 8, characterized in that, at least at one side, the lower slabs (2) are provided with a continous rim (12) at the height of the spacers (4).

10. Trafficable rotting-slab system according to one of the claims 1 to 8, characterized in that the edges of the slabs are open and are sealed in the edge region of the system by boundary stones or the like.

11. Trafficable rotting-slab system according to one of the claims 1 to 10, characterized in that the mutually adjoining edges of the lower slabs (2) each have a step-shaped shoulder (19, 20), the two shoulders overlapping when the slabs (2, 3) are laid and a seal (18) being insertable into the overlap region.

12. Trafficable rotting-slab system according to one of the claims 2 to 10, characterized in that the mutually adjoining edges of the lower slabs (2) have grooves (25) with inserted sealing strips (26).

13. Trafficable rotting-slab system according to one of the claims 2 to 12, characterized in that the coupling rings (30) which surround with a positive fit the regions of the spacers which rest on one another are provided for centering the slabs relative to one another.

14. Trafficable rotting-slab system according to claim 13, characterized in that the dividing line between the individual slabs runs through the centers of the spacers, spacer quarters (31) in each case being created in the corners of the slabs, which quarters, together with the quarters of the three adjoining slab corners, form a full spacer, and in that a coupling ring (30) is pushed onto the four adjoining quarters (31).

15. Trafficable rotting-slab system according to one of the claims 1 to 14, characterized in that, at their upper side provided with the spacers (4), at least the lower slabs (2) are provided with a plastic coating (21).

16. Trafficable rotting-slab system according to one of the claims 1 to 15, characterized in that the passage openings (14) provided in the supporting slabs (3) are designed as slots arranged between the spacers (5).

17. Trafficable rotting-slab system according to claim 16, characterized in that the slots are widened downwards in a funnel shape.

18. Trafficable rotting-slab system according to claim 16 or 17, characterized in that the passage slots (29) are arranged obliquely to the direction of the passages (10).

## Revendications

1. Système de plaques d'infiltration carrossable, composé d'éléments en béton, pour le traitement de matières de décharge, en particulier pour la fabrication de compost, la déshydratation et/ou le traitement par passage de gaz ou similaires, ainsi que pour le traitement de gaz au moyen d'un lit de matière filtrante se trouvant sur le système de plaques d'infiltration, lequel système se compose de plaques de forme rectangulaire ou carrée comportant des ouvertures de passage prévues sur la face supérieure, d'un espace vide intérieur, en communication avec ces ouvertures, pour former un volume récepteur de liquide et/ou un système d'alimentation en gaz, ainsi que d'au moins une évacuation de liquide a partir de l'espace vide et/ou d'une admission de gaz, caractérisé en ce qu'il est prévu au moins une plaque inférieure massive (2) en béton, imperméable aux liquides, présentant une face inférieure plane destinée a reposer sur un sol compacté, en ce qu'il est posé, sur cette plaque inférieure, une plaque supérieure porteuse massive (3) en béton, a face supérieure plane, dans laquelle sont formées les ouvertures de passage (14; 29), en ce qu'il est formé, d'une seule pièce sur l'une au moins des deux plaques (2, 3), des éléments d'écartement (4, 5) qui sont disposés à distances égales en rangées se croisant à angle droit, en ce qu'à partir des surfaces portantes (6, 7) des éléments d'écartement (4, 5), les faces latérales (8, 9) de ces éléments s'étendent en arc, à la manière d'une voûte, pour se fondre dans le plan de la plaque respective et, à partir de ce plan, s'étendent en arc, à la manière d'une voûte, pour se fondre dans les faces latérales (8, 9) des éléments d'écartement (4, 5) voisins, de façon à former des passages libres (10) de grande section, et en ce qu'il est prévu, au moins dans la région des bords des plaques (2, 3), un dispositif pour immobiliser la plaque porteuse (3) par rapport à la plaque inférieure (2).

2. Système de plaques d'infiltration carrossable selon la revendication 1, caractérisé en ce que les éléments d'écartement (4, 5) ont la même forme et la même disposition sur la face supérieure de la plaque inférieure (2) et sur la face inférieure de la plaque porteuse (3), et coïncident exactement les uns avec les autres lorsque les plaques sont posées l'une sur l'autre.

3. Système de plaques d'infiltration carrossable selon la revendication 2, caractérisé en ce que, lorsque les plaques (2, 3) sont posées l'une sur l'autre, il est formé des passages libres (10) qui se croisent à angle droit et ont une section pratiquement circulaire.

4. Système de plaques d'infiltration carrossable selon l'une quelconque des revendications 1 à 3, caractérisé en ce que les passages libres (10) présentent un diamètre de 8 à 15 cm.

5. Système de plaques d'infiltration carrossable selon la revendication 2 ou 3, caractérisé en ce que les surfaces portantes (6, 7) des éléments d'écartement (4, 5), dirigées les unes vers les autres, ont la forme d'un quadrilatère rectangulaire, de préférence d'un carré.

6. Système de plaques d'infiltration carrossable selon la revendication 2 ou 3, caractérisé en ce que les surfaces portantes (24), dirigées les unes vers les autres, ont une forme circulaire.

7. Système de plaques d'infiltration carrossable selon l'une quelconque des revendications 1 à 6, caractérisé en ce que les plaques inférieures (2) et les plaques porteuses (3) sont faites de béton renforcé de fibres de verre.

8. Système de plaques d'infiltration carrossable selon l'une quelconque des revendications 1 à 7, caractérisé en ce que les plaques (2, 3) sont réalisées sous forme rectangulaire ou carrée et sont posées avec une légère pente en direction d'un bord latéral, vers une rigole d'écoulement (16).

9. Système de plaques d'infiltration carrossable selon l'une quelconque des revendications 1 à 8, caractérisé en ce que les plaques inférieures (2) présentent, au moins sur un côté, un bord continu (12) à la hauteur des éléments d'écartement (4).

10. Système de plaques d'infiltration carrossable selon l'une quelconque des revendications 1 à 8, caractérisé en ce que les bords des plaques sont ouverts et en ce qu'ils sont fermés, dans la région des bords du système, par des pierres de limitation ou similaires.

11. Système de plaques d'infiltration carrossable selon l'une quelconque des revendications 1 à 10, caractérisé en ce que les bords adjacents des plaques inférieures (2) présentent chacun un décrochement en gradin (19, 20), les deux décrochements se recouvrant lors de la pose des plaques (2, 3) et une gartiture d'étanchéité (18) pouvant être insérée dans la région de recouvrement.

12. Système de plaques d'infiltration carrossable selon l'une quelconque des revendications 2 à 10, caractérisé en ce que les bords adjacents des plaques inférieures (2) présentent des rainures (25) dans lesquelles sont insérées des bandes d'étanchéité (26).

13. Système de plaques d'infiltration carrossable selon l'une quelconque des revendications 2 à 12, caractérisé en ce qu'il est prévu, pour l'alignement des plaques les unes par rapport aux autres, des anneaux d'accouplement (30) qui s'emboîtent sur les parties mutuellement juxtaposées des éléments d'écartement.

14. Système de plaques d'infiltration carrossable selon la revendication 13, caractérisé en ce la ligne de séparation entre les plaques individuelles passe par les centres des éléments d'écartement, ce qui donne lieu chaque fois, dans les angles des plaques, à des quarts (31) d'élément d'écartement qui forment, avec les quarts des trois angles de plaque adjacents, un élément d'écartement complet, et en ce qu'un anneau d'accouplement (30) est glissé sur les quatre quarts (31) mutuellement juxtaposés.

15. Système de plaques d'infiltration carrossable selon l'une quelconque des revendications 1 à 14, caractérisé en ce qu'au moins les plaques inférieures (2) sont garnies d'une couche de revêtement en matière plastique (21) sur leur face supérieure munie des éléments d'écartement (4).

16. Système de plaques d'infiltration carrossable selon l'une quelconque des revendications 1 à 15, caractérisé en ce que les ouvertures de passage (14) prévues dans les plaques porteuses (3) sont réalisées sous forme de fentes disposées entre les éléments d'écartement (5)

17. Système de plaques d'infiltration carrossable selon la revendication 16, caractérisé en ce que les fentes s'élargissent vers le bas en forme d'entonnoir (15).

18. Système de plaques d'infiltration carrossable selon la revendication 16 ou 17, caractérisé en ce que les fentes de passage (29) sont disposées obliquement par rapport à la direction des passages (10).
